**Europäisches Patentamt**

**European Patent Office**

**Office européen des brevets**

(19)

(11) Veröffentlichungsnummer : **0 279 031 B2**

(12) # NEUE EUROPÄISCHE PATENTSCHRIFT

(45) Veröffentlichungstag der neuen Patentschrift :
**18.05.94 Patentblatt 94/20**

(51) Int. Cl.⁵ : **B22C 1/02, B22C 1/18**

(21) Anmeldenummer : **87116684.9**

(22) Anmeldetag : **12.11.87**

(54) **Verfahren zum Beschleunigen der Wasseradsorption von Bentonit, insbesondere als Zuschlagstoff für Formsande.**

Die Akte enthält technische Angaben, die nach dem Eingang der Anmeldung eingereicht wurden und die nicht in dieser Patentschrift enthalten sind.

(30) Priorität : **14.02.87 DE 3704726**

(43) Veröffentlichungstag der Anmeldung :
**24.08.88 Patentblatt 88/34**

(45) Bekanntmachung des Hinweises auf die Patenterteilung :
**12.09.90 Patentblatt 90/37**

(45) Bekanntmachung des Hinweises auf die Entscheidung über den Einspruch :
**18.05.94 Patentblatt 94/20**

(84) Benannte Vertragsstaaten :
**AT BE CH ES FR GB IT LI LU NL SE**

(56) Entgegenhaltungen :
**EP-A- 0 111 616**
**DD-A- 213 369**
**Giesserei 54 (1967), Nr. 18, S. 465-471**
**Tenindustrie Zeitung 97 (1973), Nr. 2, S. 29-37**
**Prospekt Geko (Süd-Chemie AG)**

(73) Patentinhaber : **IKO Industriekohle GmbH & Co. KG**
**Schmielenfeldstrasse 82**
**D-45772 Marl (DE)**

(72) Erfinder : **Baier, Jörk**
**Dülmener Weg 80**
**D-4280 Borken (DE)**
Erfinder : **Koch, Karl**
**Dülmener Weg 109**
**D-4280 Borken (DE)**

(74) Vertreter : **Honke, Manfred, Dr.-Ing. et al**
**Patentanwälte Andrejewski, Honke & Partner,**
**Postfach 10 02 54**
**D-45002 Essen (DE)**

## Beschreibung

Die Erfindung betrifft ein Verfahren zum Beschleunigen der Wasseradsorption von Bentonit als Zuschlagstoff für Formsande, wie sie in der Gießereitechnik Verwendung finden.

In der Gießereitechnik ist es bekannt, synthetische Formsande einzusetzen, die im wesentlichen aus einer feuerfesten, körnigen Grundsubstanz und Zuschlagstoffen bestehen. Die Zuschlagstoffe haben verschiedene Aufgaben und sollen insbesondere zur Verbesserung der Oberflächenqualität der Gußteile beitragen. Den Formsanden werden als Binder natürliche anorganische Bindemittel, wie Tone, zugegeben, vor allem montmorillonithaltige Tone, sogenannte Bentonite. Betonite als Formsandbindemittel haben den Vorteil, daß eine Wiederaufarbeitung des thermisch belasteten Formsandes durchgeführt werden kann, sofern die Kristallstruktur nicht durch Hitze zerstört worden ist.

Die Wiederaufbereitung des Formsandes geschieht durch erneutes Einmischen von Wasser in den Formsand. Das Wasser wird auf der Oberfläche von Bentonitplättchen angelagert. Durch die Anlagerung der Wassermoleküle auf der Oberfläche der Bentonitplättchen verbessern sich die Festigkeitseigenschaften eines verdichteten Formsandes.

Bei den heutigen modernen Gießereien ist die thermische Belastung des bentonitgebundenen Formsandes stark erhöht worden. Die eingesetzte Sandmenge je Tonne Guß hat sich vermindert. Gleichzeitig ist die gesamte Menge Formsand im System geringer geworden. Der Formsand läuft in kürzerer Zeit um. Häufig ist die Verweilzeit der Gußteile im Formsand zusätzlich erhöht worden, um einen Abbau von Wärmespannungen der Gußteile zu erreichen. Der thermisch belastete Altsand gelangt heute, gegenüber früher, mit geringeren Gehalten an Wasser und meist höheren Temperaturen zur Wiederaufbereitung zum Mischer zurück.

Moderne Hochleistungsmischer lassen zwar sehr kurze Mischzeiten zu, allerdings bedeutet das, daß die thermisch belasteten, bentonitgebundenen Formsande häufig nicht genügend aufgeschlossen sind, weil in diesen Formsanden beim Verlassen des Mischers Wasser nicht vollständig auf den Bentonitplättchen angelagert ist. Das Wasser hat nicht genügend Zeit einzudringen. Bei "freiem" Wasser ist aber die Gefahr von Explosionspenetration und Gasfehlern gegeben. Die Gefahr von Schülpen und Erosionen tritt auf, wenn der Bentonit seine Bindekraft nicht entfalten kann.

Die Literaturstelle "Gießerei" (54. Jahrgang, 31. August 1967, Heft 18) beschäftigt sich mit der Wirkung von Kohlenstaub in Naßgußsand. In diesem Zusammenhang wird auch die Naßzugfestigkeit behandelt. Die Naßzugfestigkeit eines zusatzfreien Frischsandes wird durch kohlenstoffhaltige Zusätze erhöht. Der Festigkeitszuwachs wird mit abnehmendem Kohlenstoffgehalt der Kohle größer. Es wird vermutet, daß der Festigkeitszuwachs durch die durch Kohlenstaub vergrößerte spezifische Wärme des Formstoffes hervorgerufen wird. In diesem Zusammenhang wird der Einfluß von 5 % Graphit auf die Naßzugfestigkeit eines formgerechten Sandes mit 6 % Bentonit dargestellt. Nach diesen bekannten Maßnahmen wird der Graphit ohne Zweifel dem Formsand zugemischt, findet also eine Behandlung von Betonit als Zuschlagstoff für Formsand nicht statt. Außerdem beschäftigt sich diese Literaturstelle nicht mit Maßnahmen zum Beschleunigen der Wasseradsorption von Bentonit. Das gilt auch unter Berücksichtigung der dargestellten Änderung der Naßzugfestigkeit formgerechter Sande ohne und mit kohlenstoffhaltigen Zusätzen durch wiederholtes Abgießen mit Zugabe von 1 % Frischbentonit nach jedem Abguß, wobei der Frischsand 6 % Bentonit enthält.

Aus EP-A-0 111 616 ist ein Zusatz für Formmassen in Gießformen unter Verwendung natürlicher und/oder synthetischer Formsande mit üblichen Bindemitteln bekannt. Der Zusatz besteht aus einem Kohlenstoffprodukt oder aus einem Gemisch aus mehreren solcher Produkte, wobei das Zusatzprodukt insgesamt 0,5 bis 20 Gew.-% flüchtiger Bestandteile enthält. Auch in diesem Fall wird als Kohlenstoffprodukt beispielsweise Graphit dem Formsand zugeschlagen. Nach einem Ausführungsbeispiel findet eine Sandmischung aus Sand und einem Gemisch aus 70 % Bentonit und 30 % Kohlenstoffträger Verwendung. Als Kohlenstoffträger kann Naturgraphit Verwendung finden. Jedoch bedeuten die für das Naturgraphit/Bentonit-Gemisch angegebenen Prozentangaben einen Graphitanteil von ca. 43 % bezogen auf den Bentonit. Durch diese bekannten Maßnahmen soll die Bildung einer Schutzschicht zwischen dem flüssigen Metall und der Formsandmasse erreicht werden, um Reaktionen zwischen der Metallschmelze und dem Formsand zu verändern. Darüber hinaus bleibt offen, auf welche Weise das Gemisch aus Bentonit und Kohlenstoffträger bzw. Naturgraphit hergestellt worden ist.

Der Erfindung liegt die Aufgabe zugrunde, ein Verfahren der eingangs beschriebenen Art anzugeben, wonach sich Wasser schneller und besser als bisher auf der Oberfläche und in den Bentonitplättchen verteilt.

Diese Aufgabe löst die Erfindung bei einem gattungsgemäßen Verfahren dadurch, daß Bentonit vor seiner Verwendung als Zuschlagstoff 0,1 Gew.-% bis 20 Gew.-%, vorzugsweise 0,5 % Gew.-% bis 5 Gew.-% Graphit, bezogen auf den eingesetzten Bentonit, als ein in Wasser nicht quellendes Schichtmaterial mit ausgeprägter ebener Spaltbarkeit beim Vermahlen des Bentonits zugeschlagen wird.

Die Erfindung geht von der Erkenntnis aus, daß Bentonite Tone vulkanischen Ursprungs sind, deren Hauptbestandteil aus Montmorillonit, einem Dreischicht-Silikat, besteht. Das Elementarschichtgitter besteht aus einer $Al(OH)_5$-Oktaederschicht, an die sich beidseitig eine $SiO_2$-Tetraederschicht anlagert. Die Montmorillonitelementarschichtgitter sind zu Paketen übereinandergestapelt. In diese Pakete kann Wasser eingelagert werden und die Schichten aufweiten. Die Aufweitbarkeit dieser Elementarschichten durch Wasser hängt stark davon ab, ob z. B. Kalzium-Ionen oder Natrium-Ionen angelagert sind. Letztere ermöglichen eine sehr hohe Aufweitbarkeit, d. h. ein vergleichsweise hohes Quellen. Folglich ersetzt man angelagerte Kalzium-Ionen durch Natrium-Ionen durch die Behandlung des im Rahmen der Erfindung verwendeten Bentonits mit Soda. Es hat sich gezeigt, daß durch das Einarbeiten des beanspruchten Schichtmaterials in ein solches Bentonit dieser besser und schneller Wasser absorbiert und in wesentlich kürzerer Zeit als bisher seine Bindeeigenschaften entwickelt. Schon geringe Gehalte an Graphit verbessern die Benetzung und die Aufschlußgeschwindigkeit in einem ganz erheblichen Maße. Ein mit Graphit behandelter Bentonit ist im Vergleich zu reinem Bentonit nach thermischer Belastung der beiden in der Hälfte der Zeit wieder vollständig aufgeschlossen. Bei dem verwendeten Graphit kann es sich um Naturgraphit oder einen Elektro/Synthetik-Graphit handeln.

Die Erfindung wird im folgenden anhand eines Beispiels näher erläutert, wobei die Aufschlußgeschwindigkeit des graphithaltigen Bentonits durch die Erhöhung der Naßzugfestigkeit nachgewiesen wird.

Ein mit Soda aktivierter Calciumbentonit wurde geteilt. Bei der einen Hälfte wurden auf 100 GT Bentonit 10 GT Graphit gegeben und vermahlen. Der andere Teil wurde ohne Zusatz gemahlen. Mit beiden Bentoniten wurden Sandmischungen hergestellt.

Mischung I bestand aus

100 GT Testsand (Testsand VDG-Fachbericht Nr. 19)
6,6 GT Bentonit, der 0,6 GT eingearbeiteten Naturgraphit enthielt.

Mischung II bestand aus

100 GT Testsand (Testsand VDG-Fachbericht Nr. 19)
6 GT Bentonit

Beide Mischungen wurden zehn Minuten im Kollergang bei einem Wassergehalt von 2,6 % aufbereitet. Nach einer Trocknung der Sande bei 150° C/2 h wurden die Sandmischungen erneut in einem Flügelmischer mit 2,6 % Wasser versetzt und der Anstieg der Naßzugfestigkeit gemessen.

| Mischen im Flügel-Mischer Mischzeit | Mischung I | Mischung II |
|---|---|---|
| | Naßzugfestigkeit | |
| 1 min. trocken/ 90 sec. naß | 0,27 N/cm² | 0,10 N/cm² |
| 1 min. trocken/120 sec. naß | 0,29 N/cm² | 0,13 N/cm² |
| 1 min. trocken/240 sec. naß | 0,35 N/cm² | 0,26 N/cm² |

Mischung I wurde besser benetzt. Das Wasser wurde schneller vom Bentonit absorbiert. Die Messungen der Festigkeit bestätigten die visuelle Beobachtung.

## Patentansprüche

1. Verfahren zum Beschleunigen der Wasseradsorption von Bentonit als Zuschlagstoff für Formsande, **dadurch gekennzeichnet**, daß dem Bentonit vor seiner Verwendung als Zuschlagstoff 0,1 Gew.-% bis 20 Gew.-%, vorzugsweise 0,5 Gew.-% bis 5 Gew.-% Graphit, bezogen auf den eingesetzten Bentonit, als ein in Wasser nicht quellendes Schichtmaterial mit ausgeprägter ebener Spaltbarkeit beim Vermahlen des Bentonits zugeschlagen wird.

## Claims

1. A process to accelerate the water adsorption of bentonite as an additiv to moulding sands, characterized in that relatively to the bentonite used 0,1 % to 20 % by weight, preferably 0,5 % to 5 % by weight, of graphite as a material of laminated structure with distinctively smooth cleavage and not swelling in water is added to the bentonite during the milling of the bentonite and before its use as additive material.

## Revendications

1. Procédé pour l'accélération de l'adsorption d'eau de la bentonite utilisée comme adjuvant pour des sables de moulage caractérisé par le fait que la bentonite lors du broyage de la bentonite est additionnée, avant sa mise en oeuvre comme adjuvant, 0,1 % en poids à 20 % en poids, de preference 0,5 % en poids en 5 % en poids de graphite rapporté à la bentonite mise en oeuvre, comme une matière stratifiée non gonflable dans l'eau avec une extensibilité plane prononcée.